# EUROPÄISCHE PATENTSCHRIFT

(11) **EP 0 452 636 B1**
(45) Veröffentlichungstag und Bekanntmachung des Hinweises auf die Patenterteilung: **19.01.1994**
(21) Anmeldenummer: 91102778.7
(22) Anmeldetag: 26.02.1991
(51) Int. Cl.: A01D 34/64, A01B 59/044

(54) **Aufhängevorrichtung für ein Gerät an einem Fahrzeug**
Suspension apparatus for a vehicle-mounted device
Dispositif de suspension pour un dispositif monté sur un véhicule

(30) Priorität: 05.03.1990 US 488807
(43) Veröffentlichungstag der Anmeldung: 23.10.1991
(73) Patentinhaber: DEERE & COMPANY, Moline, Illinois 61265 (US)
(72) Erfinder: Kuhn, John Boyd, Rubicon, Wisconsin 53078 (US); Hunt, Kenneth Edward, Oconomowoc, Wisconsin 53066 (US); Thorman, Christopher Scott, Beaver Dam, Wisconsin 53916 (US)
(74) Vertreter: Feldmann, Bernhard

(56) Entgegenhaltungen:
- US-A- 3 503 189
- US-A- 3 508 386
- US-A- 3 706 188
- US-A- 3 948 025

## Beschreibung

Die Erfindung bezieht sich auf eine Aufhängevorrichtung für ein Gerät an einem Fahrzeug mit zwei am Fahrzeug und Gerät gelenkig angeschlossenen Hubteilen und Aufhängemitteln, die zwei mit gegenseitigem Querabstand am Fahrzeug angeordnete Fanghaken zur drehbeweglichen Aufnahme eines Bügelelements aufweisen, das anderenends mit dem Gerät lösbar verbunden ist.

Derartige Aufhängevorrichtungen dienen in der Regel zum Anschließen eines Rasenmähers an einen Kleinschlepper. Da aber der Kleinschlepper auch für andere Arbeiten eingesetzt werden muß, wie zum Beispiel Schneeräumen, Planieren, Laden etc., besteht die Forderung, daß der Rasenmäher bei Nichtbenutzung wieder abgebaut werden kann.

Bei der Aufhängevorrichtung, von der die Erfindung ausgeht (US-A-4 882 898), ist der als Sichelmäher ausgebildete Rasenmäher zwischen den Achsen eines Kleinschleppers über ein Parallelogrammgestänge aufgehängt, das sicherstellt, daß bei einer Höhenverstellung das vordere und rückwärtige Ende des Rasenmähers gleichmäßig verstellt werden. Im einzelnen sind zwei als rückwärtige Streben ausgebildete Hubteile vorgesehen, die über Schnellverschlüsse, wie federbelastete Zapfen, mit am rückwärtigen Ende des Rasenmähers vorgesehenen hochstehenden Auslegern verbunden sind. Am frontseitigen Ende des Rasenmähers wiederum ist ein Bügelelement ebenfalls über Schnellverschlüsse angeschlossen, das aus an ihrem vorderen Ende über eine Stange miteinander verbundenen Streben besteht. Zum Anschließen des Rasenmähers an den Kleinschlepper werden, nachdem der Bügelteil an das vordere Rasenmäherende angeschlossen wurde, zunächst die rückwärtigen Hubteile über die Schnellverschlüsse mit dem hinteren Rasenmäherende verbunden. Sodann wird die seitlich über die Enden der Streben überstehende Stange hochgehoben und in die verschwenkbaren Fanghaken eingesetzt. Danach werden die an beiden Seiten des Kleinschleppers an Auslegern angeordneten und über eine Stange miteinander verbundenen Fanghaken über einen Handhebel in ihre Betriebsstellung verschwenkt und dort arretiert.

Diese Aufhängevorrichtung ermoglicht zwar einen relativ einfachen An- und Abbau des Rasenmähers, ist jedoch in ihrem Aufbau aufwendig, da sie zu viele Teile benötigt. Zudem sind die bei abgebautem Rasenmäher am Kleinschlepper verbleibenden schwenkbaren Fanghaken infolge ihrer Lagerstellen störanfällig.

Andererseits ist bereits eine Aufhängevorrichtung für ein Gerät an einem Fahrzeug vorgeschlagen worden (US-A-3 948 025), die einen vorderen Tragrahmen mit einer frontseitigen Querstrebe aufweist, die mit ihren beiden Enden von am Fahrzeug ortsfest angebrachten Fanghaken aufgenommen und im Bereich ihrer beiden Enden mit Scheibenteilen versehen ist, an denen zum Gerät führende Lenker mit ihren vorn liegenden Enden angelenkt sind. Die Scheibenteile werden im Einsatz über federbelastete Stifte mit die Fanghaken aufnehmenden Platten arretiert, und die rückwärtigen Enden der Lenker sind über Schnellverschlüsse an das Gerät angeschlossen. Eine solche Aufhängevorrichtung ist natürlich teileaufwendig.

Die Erfindung schafft hier Abhilfe, und das anzuschließende Gerät läßt sich in kürzerer Zeit an- und abbauen.

Dies wird dadurch erreicht, daß die fahrzeugseitigen Fanghaken ortsfest angeordnet sind und das Gerät zu den fahrzeugseitigen Fanghaken ausgerichtete Fanghaken zur Aufnahme des Bügelelements aufweist, wobei das Bügelelement in den fahrzeugseitigen oder geräteseitigen Fanghaken über einen verstellbaren Exzenter angeordnet ist.

Nach dem Anschließen der Hubteile in ähnlicher Form wie bei der eingangs genannten Aufhängevorrichtung braucht der Bügelteil nur noch in die fahrzeug- und geräteseitigen Fanghaken eingesetzt zu werden, der Exzenter wird verdreht, und das Gerät befindet sich in seiner Betriebsstellung. Das Abbauen erfolgt in umgekehrter Weise genauso schnell.

Der Bügelteil kann flexible Glieder, wie Ketten oder ähnliches, aufweisen, die durch das Verdrehen des Exzenters gespannt werden. Nach der Erfindung wird jedoch eine starre Ausführung des Bügelteils bevorzugt, weshalb der Bügelteil zwei mit gegenseitigem Abstand zueinander angeordnete und mit den fahrzeugseitigen bzw. geräteseitigen Fanghaken gekuppelte Querteile aufweist, die über Schenkel miteinander verbunden sind. Hierdurch ist das Anschließen einfacher und die Aufbewahrung bei abgebautem Gerät leichter.

Nach der Erfindung wird ferner vorgeschlagen, daß einer der Querteile auf dem als gekröpfte Welle ausgebildeten Exzenter drehbeweglich angeordnet ist.

Eine einfache Justierung des Bügelteils bzw. des angeschlossenen Gerätes läßt sich dadurch erreichen, daß die Schenkel mit mindestens einem der Querteile verstellbar verbunden sind. Hierzu bietet sich beispielsweise eine Verschraubung an.

Vorteilhaft ist der Exzenter aus einer Aufnahmestellung in eine Betriebsstellung in den fahrzeugseitigen oder geräteseitigen Fanghaken verstellbar, wozu der Exzenter mit einem Handhebel versehen ist, der in der Betriebsstellung des Exzenters mit einem fahrzeugseitigen und endseitig als Fanghaken ausgebildeten Ausleger verrastbar ist. Das angeschlossene Gerät wird dadurch in seiner Betriebsstellung sicher gehalten.

Im einzelnen kann hierzu der Handhebel eine Nase aufweisen, die in eine Ausnehmung in dem Ausleger einrastbar ist.

Damit der Exzenter nicht über seine Betriebsstellung hinaus verdrehbar ist, kann er mit einem eine Anschlagfläche aufweisenden Hebel versehen sein, wobei die Anschlagfläche in der Betriebsstellung des Exzenters gegen einen Anschlag an einem von zwei fahrzeugseitig vorgesehenen Auslegern anliegt.

Die vorteilhafte Ausbildung der Aufhängevorrichtung macht es damit möglich, daß bei abgebautem Gerät nur noch die ortsfesten Haken am Fahrzeug verbleiben. Die wenigen abgebauten Teile sind leicht aufzubewahren. Der Versand ist ebenfalls einfach.

In der Zeichnung ist ein nachfolgend näher erläutertes Ausführungsbeispiel der Erfindung dargestellt. Es zeigt:
- Fig. 1: einen Kleinschlepper in Form eines Rasen- und Gartenschleppers mit angebautem Rasenmäher,
- Fig. 2: eine Aufhängevorrichtung für den Rasenmäher,
- Fig. 3: einen Schnitt nach der Linie 3 : 3 in Fig. 2,
- Fig. 4: den vorderen rechten Teil der Aufhängevorrichtung in perspektivischer Ansicht,
- Fig. 5: eine ähnliche Darstellung wie Fig. 4, jedoch den linken vorderen Teil der Aufhängevorrichtung zeigend, und
- Fig. 6: den vorderen Teil der Aufhängevorrichtung in perspektivischer Darstellung mit dem Exzenter in seiner Aufnahmeposition.

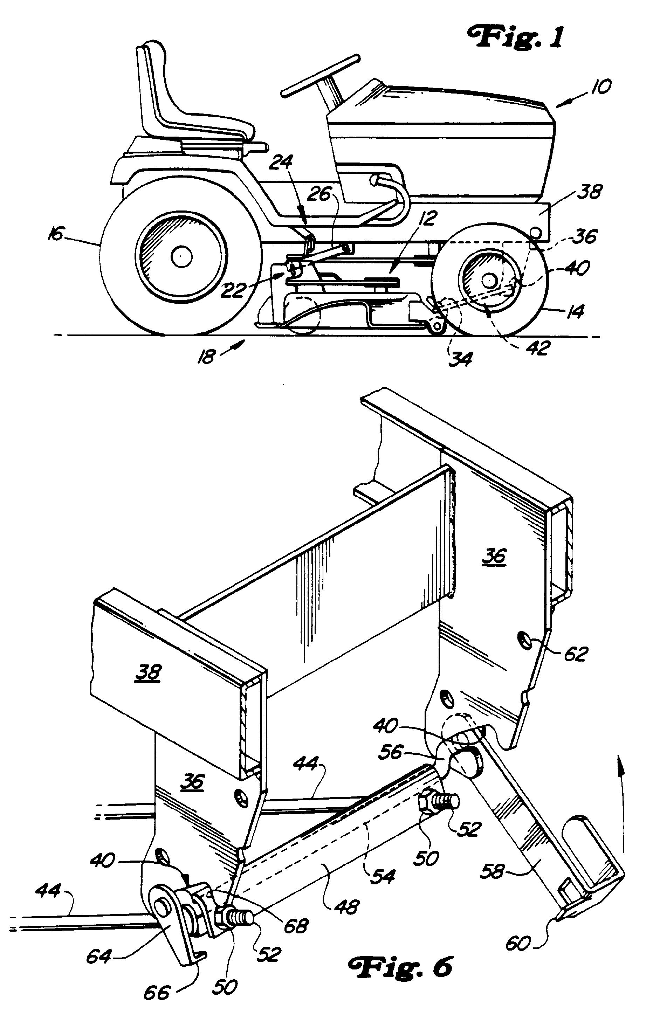

In Fig. 1 der Zeichnung ist ein Fahrzeug 10 in Form eines Rasen- und Gartenschleppers dargestellt, an dem ein Gerät 12, hier ein Rasenmäher mit einem um eine vertikale Achse umlaufenden Messer, aufgehängt ist. Das an sich bekannte Fahrzeug 10 ist mit vorderen und rückwärtigen Rädern 14 und 16 versehen, die einen ausreichend großen Abstand aufweisen, um das Gerät 12 zwischen sich aufnehmen zu können.

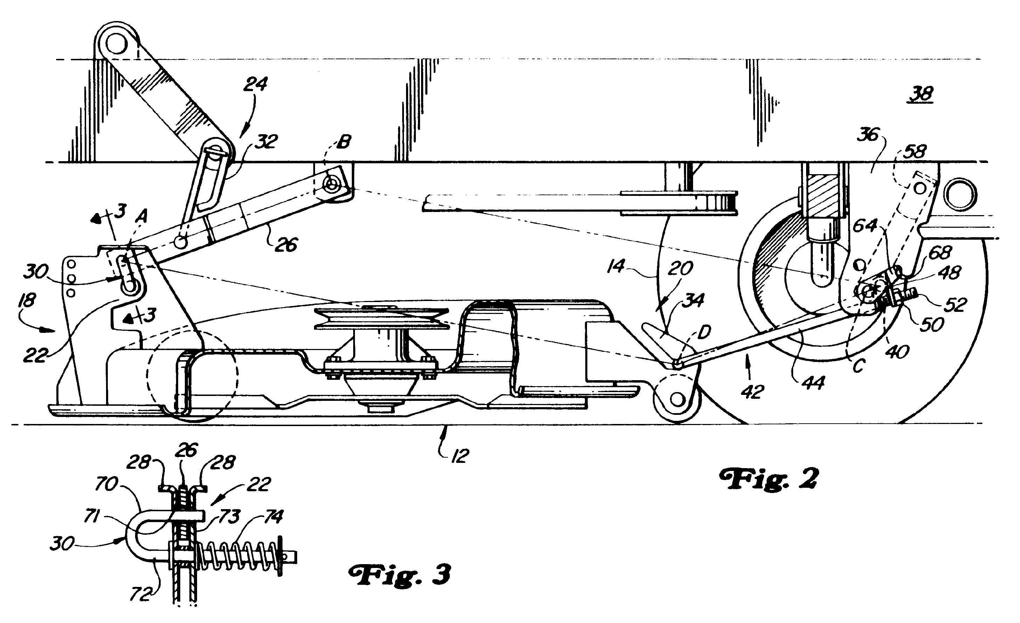

Aus der Fig. 2 geht hervor, daß das Gerät 12 mit seinem rückwärtigen Ende 18 und mit seinem frontseitigen Ende 20 an das Fahrzeug 10 angeschlossen ist. Die Aufhängevorrichtung ist hierzu als Parallelogrammgestänge ausgebildet, damit bei einer Höhenverstellung das rückwärtige und frontseitige Ende 18 und 20 gleichmäßig verstellt werden.

Im einzelnen weist die Vorrichtung zum lösbaren Aufhängen des Gerätes 12 zwei mit Querabstand zueinander angeordnete Ausleger 22 am rückwärtigen Ende des Gerätes 12 auf. Eine herkömmliche Hubvorrichtung 24 ist am Fahrzeug vorgesehen und greift an zwei strebenförmigen Hubteilen 26 an, um die Höhe des Gerätes 12 unterhalb des Fahrzeuges 10 einstellen zu können. Die Verwendung eines einzigen Hubteiles 26 ist ebenfalls möglich. In jedem Fall jedoch wird jeder Hubteil 26 an seinem geräteseitigen Ende zwischen den beiden Seiten eines Auslegers 22 über einen Schnellverschluß aufgenommen, wie es die Fig. 3 zeigt. Als Schnellverschluß dient ein federbelasteter, J-förmig ausgebildeter Stecker 30, so daß der oder die Hubteile 26 schnell und einfach angeschlossen werden können. Die Hubteile 26 sind dabei anderenends schwenkbar an die Unterseite des Fahrzeuges angeschlossen. Sie können bei abgebautem Gerät 12 dort verbleiben, was aber nicht zwingend ist.

Die Hubvorrichtung 24 ist mit dem oder den Hubteilen 26 über ein Gestänge 32 verbunden, das eine Aufwärtsbewegung des in der Regel sich auf dem Boden über Rollen abstützenden Gerätes 12 zuläßt, falls dieses auf eine Erderhebung oder ein anderes Hindernis stoßen sollte.

Am vorderen Ende des Gerätes 12 sind zwei mit gegenseitigem Querabstand zueinander angeordnete Fanghaken 34 vorgesehen, deren Fangausnehmungen nach oben hin offen sind und nach rückwärts zeigen, wie es am besten aus der Fig. 2 erkennbar ist. In ähnlicher Weise sind zwei Fanghaken 40 an der Unterseite des Fahrzeuges 10 angeordnet, wozu am Rahmen 38 des Fahrzeuges 10 zwei mit gegenseitigem Querabstand zueinander angeordnete Ausleger 36 fest angeordnet sind, die an ihren unteren Enden als Fanghaken 40 ausgebildet sind. Auch die Fangausnehmungen der Fanghaken 40 sind nach oben offen, jedoch nach vorne gerichtet. Eine vordere Aufhängung 42 vervollständigt die Aufhängevorrichtung.

Die vordere Aufhängung 42 weist ein in die geräte- und fahrzeugseitigen Fanghaken 34 und 40 eingreifendes Bügelelement 43 auf, das unter anderem aus einem U-förmigen Teil mit Schenkeln 44 und einem mit diesen fest verbundenen Querteil 46 besteht, der als Steg dient. Der U-förmige Teil kann einstückig ausgebildet sein, aber ein Ersatz durch zwei Ketten ist möglich. Die dem Steg abgelegenen frontseitigen Enden der beiden Schenkel 44 sind mit einem weiteren Querteil 48 lösbar verbunden, wozu der Querteil 48 entsprechende Bohrungen zur Aufnahme der mit Gewinde versehenen Schenkelenden 52 aufweist. Eine Sicherung erfolgt über Muttern 50. Je nachdem, wie weit die Muttern aufgeschraubt sind, ändert sich die wirksame Länge der Schenkel 44. Ein einfaches Einstellen des angehängten Gerätes 12 ist dadurch möglich.

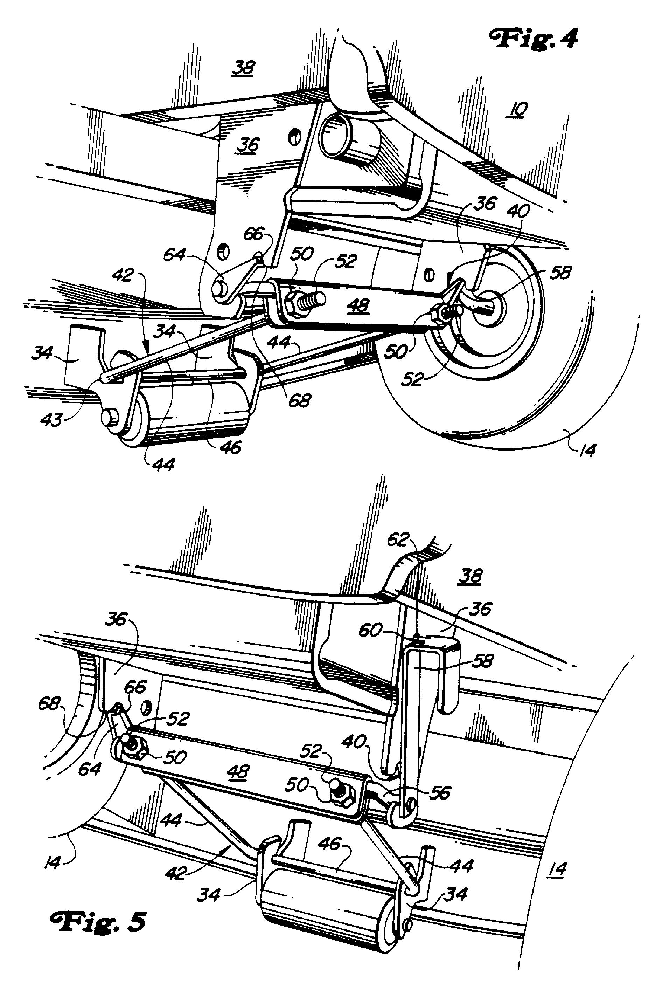

Der Querteil 46 ist hülsenförmig ausgebildet, auf einem als abgesetzte Welle geformten Exzenter 54 aufgesetzt und auf diesem drehbar. Die abgesetzten Enden 56 des Exzenters 54 können von den Fangausnehmungen der fahrzeugseitigen Fanghaken 40 aufgenommen werden und sind in diesen drehbar. Um den Exzenter 54 verdrehen zu können, ist an seinem einen Ende 56 ein Handhebel 58 fest angeordnet, der an seinem oberen Ende eine Nase 60 aufweist, die in eine Ausnehmung 62 in einem der Ausleger 36 einrasten kann (Fig. 4 und 5).

An dem dem Handhebel 58 abgelegenen Ende des Exzenters 54 ist noch ein Hebel 64 fest angeschlossen, der an seinem Ende eine Anschlagfläche 66 aufweist. In der in Fig. 4 wiedergegebenen Stellung erstreckt sich der Hebel 64 nach oben und vorne, so daß sich seine Anschlagfläche 66 gegen einen Anschlag 68 an dem zugehörigen Ausleger 36 legt. Der Anschlag 68 kann so ausgebildet sein, daß er ein Verschwenken des Exzenters über die in Fig. 4 gezeigte Betriebsstellung hinaus verhindert. Gleichzeitig kann der Anschlag den Exzenter in der Betriebsstellung halten.

Zum Anschließen des Gerätes 12 wird dieses zunächst zwischen die Achsen des Fahrzeuges 10 gesetzt, und zwar so, daß die beiden Hubteile 26 in die Ausleger 22 eingesetzt werden können. Da die Stecker 30 als Schnellverschlüsse ausgebildet sind, braucht an diesen nur gezogen zu werden, wodurch deren kurzer oberer Schenkel 70 aus entsprechenden Bohrungen 71 in den Auslegern 22 austritt, die Hubteile 26 werden zwischen die Wände 28 eines jeden Auslegers 22 eingelegt, wobei jeder Hubteil 26 auf dem langen unteren Schenkel 72 aufliegt, und die Stecker werden wieder losgelassen, wobei deren kurzer Schenkel 70 aufgrund von auf die langen Schenkel 72 aufgeschobenen Federn 74 in die Bohrungen 71 zurückschnellt. Selbstverständlich sind in den Hubteilen entsprechende Gegenbohrungen 73 vorgesehen.

Sodann soll die Bedienungsperson den einen Querteil 46 des Bügelelementes 43 in die Fangausnehmungen der geräteseitigen Fanghaken 34 einsetzen. Danach wird das Bügelelement 43 hochgeklappt und mit den abgesetzten Enden 56 des Exzenters 54 in die Fangausnehmungen der fahrzeugseitigen Fanghaken 40 eingesetzt, die so ausgebildet sind, daß sie eine Lagerstelle für die Enden 56 bilden. Über den Handhebel 58 wird der Exzenter 54 in seinen Lagerstellen gedreht, wobei der geräteseitige Querteil 46 gegen die geschlossenen Enden der geräteseitigen Fangausnehmungen gezogen wird und das Bügelelement in seine Betriebsstellung gelangt, in der auf das Gerät 12 ein Zug ausgeübt wird. Damit ist das Gerät 12 betriebssicher zwischen den Achsen des Fahrzeuges 10 geführt. Zweckmäßig kann der Handhebel 58 etwas seitlich ausbiegbar sein, so daß er leicht mit seiner Nase 60 in die Ausnehmung 62 eingesetzt werden kann. Beim Verschwenken wird er dazu leicht nach außen gezogen.

Sofern erforderlich, kann über die Muttern 50 noch eine Feineinstellung durchgeführt werden, falls das Gerät sich nicht in einer gewünschten Lage befindet oder wenn das Bügelelement in den Fangausnehmungen der Fanghaken noch Spiel haben sollte.

Die Gesamtaufhängung ist als Parallelogramm ausgebildet, das in Fig. 2 mit strichpunktierten Linien angedeutet ist. Die Gelenkpunkte sind mit A, B, C und D bezeichnet. Das Parallelogrammgestänge ermöglicht eine gleichmäßige Verstellung des vorderen und rückwärtigen Endes des Gerätes 12.

Der Abbau des Gerätes erfolgt in umgekehrter Reihenfolge. Die als Schnellverschlüsse ausgebildeten Stecker 30 verbleiben am Gerät 12, und als einziges Teil braucht nur das Bügelelement 43 zusätzlich aufbewahrt zu werden, sofern die Hubteile 26 am Fahrzeug 10 verbleiben.

## Patentansprüche

1. Aufhängevorrichtung für ein Gerät (12) an einem Fahrzeug (10) mit zwei am Fahrzeug (10) und Gerät (12) gelenkig angeschlossenen Hubteilen (26) und Aufhängemitteln (42), die zwei mit gegenseitigem Querabstand am Fahrzeug (10) angeordnete Fanghaken (40) zur drehbeweglichen Aufnahme eines Bügelelements (43) aufweisen, das anderenends mit dem Gerät (12) lösbar verbunden ist, dadurch gekennzeichnet, daß die fahrzeugseitigen Fanghaken (40) ortsfest angeordnet sind und das Gerät (12) zu den fahrzeugseitigen Fanghaken (40) ausgerichtete Fanghaken (34) zur Aufnahme des Bügelelements (43) aufweist, wobei das Bügelelement (43) in den fahrzeugseitigen oder geräteseitigen Fanghaken (40 oder 34) über einen verstellbaren Exzenter (54) angeordnet ist.

2. Aufhängevorrichtung nach Anspruch 1, dadurch gekennzeichnet, daß der Bügelteil (43) zwei mit gegenseitigem Abstand zueinander angeordnete und mit den fahrzeugseitigen bzw. geräteseitigen Fanghaken (40 bzw. 34) gekuppelte Querteile (46, 48) aufweist, die über Schenkel (44) miteinander verbunden sind.

3. Aufhängevorrichtung nach Anspruch 2, dadurch gekennzeichnet, daß einer der Querteile (46, 48) auf dem als gekröpfte Welle ausgebildeten Exzenter (54) drehbeweglich angeordnet ist.

4. Aufhängevorrichtung nach Anspruch 2, dadurch gekennzeichnet, daß die Schenkel (44) mit mindestens einem der Querteile (46, 48) verstellbar verbunden sind.

5. Aufhängevorrichtung nach einem oder mehreren der vorherigen Ansprüche, dadurch gekennzeichnet, daß der Exzenter (54) aus einer Aufnahmestellung in eine Betriebsstellung in den fahrzeugseitigen oder geräteseitigen Fanghaken (40, 34) verstellbar ist.

6. Aufhängevorrichtung nach Anspruch 5, dadurch gekennzeichnet, daß der Exzenter (54) für seine Verstellung mit einem Handhebel (58) versehen ist, der in der Betriebsstellung des Exzenters (54) mit einem fahrzeugseitigen und endseitig als Fanghaken ausgebildeten Ausleger (36) verrastbar ist.

7. Aufhängevorrichtung nach Anspruch 6, dadurch gekennzeichnet, daß der Handhebel (58) eine Nase (60) aufweist, die in eine Ausnehmung (62) in dem Ausleger (36) einrastbar ist.

8. Aufhängevorrichtung nach Anspruch 5, dadurch gekennzeichnet, daß der Exzenter (54) mit einem eine Anschlagfläche (66) aufweisenden Hebel (64) versehen ist, wobei die Anschlagfläche (66) in der Betriebsstellung des Exzenters (54) gegen einen Anschlag (68) an einem von zwei fahrzeugseitig vorgesehenen Auslegern (36) anliegt.

## Claims

1. A suspension device for an apparatus (12) on a vehicle (10) with two lift parts (26) hinged to the vehicle (10) and the apparatus (12) and suspension means (42), which comprise two catch hooks (40) transversely spaced from each other on the vehicle (10) for rotary reception of a stirrup element (43), which is releasably connected at the other end to the apparatus (12), characterized in that the catch hooks (40) on the vehicle are arranged in a fixed position and the apparatus (12) comprises catch hooks (34) for reception of the stirrup element (43) aligned with the catch hooks (40) on the vehicle, wherein the stirrup element (43) is arranged in the catch hooks (40 or 34) on the vehicle or on the apparatus via an adjustable eccentric (54).

2. A suspension device according to claim 1, characterized in that the stirrup element (43) comprises two mutually spaced transverse parts (46, 48) coupled to the catch hooks (40 and 34) on the vehicle or the apparatus respectively and which are connected together by arms (44).

3. A suspension device according to claim 2, characterized in that one of the transverse parts (46, 48) is rotatably arranged on the eccentric (54) formed as a cranked shaft.

4. A suspension device according to claim 2, characterized in that the arms (44) are adjustably connected to at least one of the transverse parts (46, 48).

5. A suspension device according to one or more of the preceding claims, characterized in that the eccentric (54) is adjustable from a receiving position into an operating position in the catch hooks (40, 34) on the vehicle or on the apparatus.

6. A suspension device according to claim 5, characterized in that the eccentric (54) is provided with a manual lever (58) for its adjustment, which can be latched in the operating position of the eccentric (54) to a bracket (36) on the vehicle formed at its end as a catch hook.

7. A suspension device according to claim 6, characterized in that the manual lever (58) has a nose (60) which can snap into a recess (62) in the bracket (36).

8. A suspension device according to claim 5, characterized in that the eccentric (54) is provided with a lever (64) having a stop surface (66), wherein the stop surface (66) bears in the operating position of the eccentric (54) against a stop (68) on one of two brackets (36) provided on the vehicle.

## Revendications

1. Dispositif pour accrocher un équipement (12) à un véhicule (10), avec deux éléments de levage (26) raccordés de manière articulée au véhicule (10) et à l'équipement (12), et avec des moyens d'accrochage (42) comprenant deux crochets d'arrêt (40), disposés à distance transversale mutuelle sur le véhicule (10) et destinés à recevoir en mobilité de rotation une pièce en étrier (43), dont l'autre extrémité est assemblée de manière détachable à l'équipement (12), **caractérisé** en ce que les crochets d'arrêt (40) du véhicule sont fixes, et l'équipement (12) présente des crochets d'arrêt (34) alignés avec les crochets d'arrêt (40) du véhicule et destinés à recevoir la pièce en étrier (43), la pièce en étrier (431 étant disposée dans les crochets d'arrêt du véhicule ou de l'équipement (40 ou 34) par l'intermédiaire d'un excentrique déplaçable (54).

2. Dispositif d'accrochage selon la revendication 1, **caractérisé** en ce que la pièce en étrier (43) présente deux parties transversales (46, 48), disposées à distance mutuelle et respectivement accouplées aux crochets d'arrêt du véhicule ou de l'appareil (40 ou 34), qui sont mutuellement reliées par des branches (44).

3. Dispositif d'accrochage selon la revendication 2, **caractérisé** en ce qu'une des parties transversales (46, 48) est disposée en mobilité de rotation sur l'excentrique (54), réalisé sous la forme d'un arbre contrecoudé.

4. Dispositif d'accrochage selon la revendication 2, **caractérisé** en ce que les branches (44) sont reliées avec possibilité de réglage à au moins une des parties transversales (46, 48).

5. Dispositif d'accrochage selon une ou plusieurs des revendications précédentes, **caractérisé** en ce que l'excentrique (54) peut être déplacé, dans les crochets d'arrêt du véhicule ou de l'équipement (40, 34), d'une position de réception dans une position de service.

6. Dispositif d'accrochage selon la revendication 5, **caractérisé** en ce que l'excentrique (54) est pourvu, pour son déplacement, d'un levier à main (58) qui, dans la position de service de l'excentrique (54), peut être verrouillé par enclenchement avec une console (36), prévue sur le véhicule et dont l'extrémité est configurée en crochet d'arrêt.

7. Dispositif d'accrochage selon la revendication 6, **caractérisé** en ce que le levier à main (58) présente un ergot (60) qui peut être enclenché dans un évidement (62) pratiqué dans la console (36).

8. Dispositif d'accrochage selon la revendication 5, **caractérisé** en ce que l'excentrique (54) est pourvu d'un levier (64) présentant une face de butée (66), la face de butée (66) s'appuyant, dans la position de service de l'excentrique (54), contre une butée (68) formée sur l'une de deux consoles (36) prévues sur le véhicule.
